# EUROPÄISCHE PATENTSCHRIFT

(11) **EP 3 530 114 B1**
(45) Veröffentlichungstag und Bekanntmachung des Hinweises auf die Patenterteilung: **23.12.2020**
(21) Anmeldenummer: 19159436.5
(22) Anmeldetag: 26.02.2019
(51) Int. Cl.: A01M 1/20

(54) **VORRICHTUNG ZUR BEKÄMPFUNG VON INSEKTEN**
DEVICES FOR THE CONTROL OF INSECTS
DISPOSITIFS DE LUTTE CONTRE LES INSECTES

(30) Priorität: 26.02.2018 AT 501672018
(43) Veröffentlichungstag der Anmeldung: 28.08.2019
(73) Patentinhaber: NIFRA Parfümerie Gesellschaft m.b.H. Nachfolger Panny KG, 1050 Wien (AT)
(72) Erfinder: Wiltschek, Georg, 1180 Wien (AT)
(74) Vertreter: Sonn & Partner Patentanwälte

(56) Entgegenhaltungen:
- EP-A1- 0 658 306
- US-A- 3 427 743
- US-A- 3 704 539

## Beschreibung

Die Erfindung betrifft eine Vorrichtung zur Bekämpfung von Insekten mit einem Oberteil, einem im Wesentlichen von einem Umfang des Oberteils abstehenden Mantel und einem Insektizidkörper.

Im Stand der Technik sind eine Vielzahl von Methoden und Vorrichtungen zur Bekämpfung von Insekten, insbesondere kriechenden Insekten, z.B. Ameisen, bekannt. Dabei werden die Ameisen mit in vorzugsweise im Bereich von Ameisenstraßen vorgesehenen Kontaktgiften in Berührung gebracht, die die Ameisen in den Bau zurücktragen, sodass auch weitere, sich im Bau befindliche Ameisen bzw. die Brut getötet wird, oder es werden Fraß- oder Lockstoffe vergiftet, sodass die Ameisen, wenn sie den Fraßkörper aufnehmen, getötet werden. Als Insektizide, Insektenvertilgungsmittel bzw. Insektenvernichtungsmittel sind dabei im Stand der Technik eine Vielzahl an möglichen Wirkstoffen, beispielsweise Pyrethroide, bekannt, die häufig gemeinsam mit Hilfsstoffen verwendet werden und mit diesen eine Insektizidzusammensetzung bilden. Eine weitere Möglichkeit sind Ameisenfallen, in die die Ameisen gelockt werden und aus denen sie anschließend nicht mehr entkommen können.

Solche bekannte Vorrichtungen können in einem einfachen Fall aus einer Platte und einem an deren Unterseite angebrachten Insektizidkörper bestehen, der mit einer Insektizidzusammensetzung getränkt ist. Ein wesentlicher Nachteil einer solch einfachen Vorrichtung besteht allerdings darin, dass Menschen oder Tiere mit dem Insektizidkörper einfach in Berührung kommen können, weshalb eine solche Vorrichtung insbesondere für Kleinkinder oder Haustiere eine Gefährdung darstellen kann. Solche Vorrichtungen können durch Normen, Gesetze und Verordnungen, die dem Schutz von Mensch und Tier dienen sollen, verboten sein.

Weiters offenbart die US 5,152,097 eine Giftabgabevorrichtung für Feuerameisen und andere kleine Insekten aus einem Grundgerüst, die in einem befallenen Gebiet in den Boden gesteckt werden kann, und eine vom Grundgerüst gestützten Abdeckung. Die Abdeckung erstreckt sich über das Grundgerüst fast bis zum Boden und lässt somit einen kleinen Abstand im Umfang der Vorrichtung frei, sodass Insekten in diesen gelangen können. Die Abdeckung wird dabei von einem rohrförmigen Element des Grundgerüsts getragen und hat an seinem unteren Ende Öffnungen. Gift ist im rohrförmigen Element angebracht. Die Giftabgabevorrichtung schützt das Gift vor Umwelteinflüssen und isoliert es von Kindern und Tieren. Die Vorrichtung ist allerdings ausgesprochen kompliziert und dementsprechend teuer herzustellen. Sie weist weiters gezwungenermaßen einen Boden in Form des Grundgerüsts auf. Weiters ist sie nur für den Außenbereich geeignet, da vorgesehen ist, dass sie mit in den Boden gerammten Pfählen befestigt wird, was beispielsweise in einem Haus unmöglich wäre. Der Berührungsschutz gegenüber größeren Lebewesen ist aufgrund der zweiteiligen Ausführung, bei der die Abdeckung mit dem Gift entfernt werden kann, möglicherweise verringert, da das zu schützende Lebewesen diese Handlung beabsichtigt oder unbeabsichtigt durchführen könnte. Weiters kann die Akzeptanz durch Insekten bzw. Zugänglichkeit für Insekten eingeschränkt sein. Erstens müssen die Insekten zwei Öffnungen durchtreten, nämlich die enge Abstandsöffnung zwischen Abdeckung und Boden und die Durchtrittsöffnungen im rohrförmigen Element. Zweitens ist das Gift in großer Höhe zum Boden befestigt, was die Wahrscheinlichkeit, dass Insekten zu diesem gelangen, verringert. Drittens kann durch den bereits erwähnten Boden die Zugänglichkeit oder Akzeptanz des Vorrichtung eingeschränkt sein. Weiters kann die Vorrichtung zu groß für die Verwendung im Innenbereich sein.

Die US 1,372,780 offenbart einen Insektenvernichter mit einer scheibenförmigen Grundplatte mit kleinen Sockeln, einem mit einer insektiziden Substanz behandelten Kissen, das lose von der Grundplatte getragen wird, eine Kuppel mit Durchgängen für die Insekten und mit Kragen, um mit der Grundplatte entfernbar befestigbar zu sein und das Kissen in seiner Position einzuklemmen. Diese Vorrichtung weist jedoch ähnliche Nachteile wie die bereits oben angeführten auf. So weist sie gezwungenermaßen einen Boden auf, auf dem das insektizidhaltige Kissen liegen muss. Weiters kann die Vorrichtung möglicherweise von Tieren oder Kleinkindern unbeabsichtigt geöffnet werden, wodurch diese in Kontakt mit dem Insektizid kommen könnten.

Weiters zeigt die US 2005/0252074 A1 eine Giftködervorrichtung mit einem Gehäuse mit Eintrittsöffnungen, die zu einer Innenkammer führen, in der eine erste und eine zweite Verfütterungsstation vorgesehen sind. Dessen Gehäuse weist eine kuppelförmige obere Abdeckeinheit, eine Kontureinheit mit einer unteren Wand und eine obere Wand auf.

Die US 2005/0150153 A1 zeigt eine omnidirektionale Insektiziddarreichungsvorrichtung mit einem Körper, wobei Zacken aus der Vorrichtung hervorstehen, sodass der Körper der Vorrichtung von einer Oberfläche beabstandet gehalten wird. In Rillen kann ein Insektizid aufgebracht werden.

Weiters zeigt die DE 25 24 514 A1 eine Ungezieferköderdose, wobei ein unterer Hohlzylinder mit einer Bodenfläche als Bodenteil und ein oberer Hohlzylinder mit einer Deckelfläche als Deckteil vorgesehen sind, wobei der untere und der obere Hohlzylinder zusammengeschoben sind. Die beiden Hohlzylinder weisen jeweils Öffnungen auf und sind im zusammengeschobenen Zustand zueinander drehbar, sodass sie durch Drehung der Hohlzylinder zueinander in Deckung gebracht werden können.

Des Weiteren offenbart die US 2,977,711 A eine Giftködervorrichtung für Nagetiere bestehend aus zwei separaten Komponenten. Die erste Komponente stellt eine Abdeckung dar, um die zweite Komponente, den Giftködertrog, zu umschließen, und weist Öffnungen auf, um Nagetieren den Zugang zum Giftködertrog zu ermöglichen.

EP 0 658 306 A1, US 3 427 743 A und US 3 704 539 A offenbaren weitere Vorrichtungen zur Bekämpfung von Insekten.

Eine Aufgabe der Erfindung ist es, eine Vorrichtung zur Bekämpfung von Insekten, insbesondere für den Gebrauch im Innenbereich, zu schaffen, die die oben angeführten Nachteile des Standes der Technik vermeidet oder verringert. Dabei soll insbesondere eine möglichst einfache Vorrichtung geschaffen werden, die auch einfach und billig zu produzieren ist und somit auch ein Einmalprodukt darstellen kann, bei der nach einem gewissen Zeitraum aufgrund der geringen Kosten und dem geringen Materialaufwand die gesamte Vorrichtung dem Abfall zugeführt werden und gegebenenfalls durch eine neue ersetzt werden kann. Somit muss die Person auch beim Austausch nicht mit dem Insektizid in Berührung kommen. Es ist weiterhin eine Aufgabe, allgemein einen Kontakt von Mensch oder Tier mit dem Insektizidkörper zu verhindern oder zu erschweren und diesbezügliche Normen zu erfüllen. Weiters soll der Insektizidkörper für Insekten allerdings möglichst einfach zugänglich sein und die von den Insekten zurückzulegende Strecke innerhalb der Vorrichtung die Insekten möglichst wenig aus der Umgebung herausführen, sodass eine hohe Akzeptanz erreicht wird, z.B. indem die Insekten sich nicht über einen Boden einer Vorrichtung fortbewegen müssen. Wenn die Vorrichtung derart auf eine Ameisenstraße gestellt werden kann, dass diese nicht unterbrochen wird und die Ameisen weiterhin deren Duftspur folgen können, ist die Wahrscheinlichkeit besonders groß, dass die Ameisen zum Insektizid gelangen. Weiters sollte die Vorrichtung so klein gehalten werden, dass sie im Innenbereich einfach und unauffällig angewandt werden kann.

Dies wird erzielt durch eine Vorrichtung zur Bekämpfung von Insekten der eingangs genannten Art, wobei das Oberteil, der Mantel und eine Aufstandsfläche in einer Funktionsstellung teilweise einen Hohlraum begrenzen, wobei die Vorrichtung im Hohlraum den Insektizidkörper aufweist, und zumindest eine Durchtrittsöffnung zum Hohlraum vorgesehen ist, und die Vorrichtung ein Innenteil im von Mantel, Oberteil und Aufstandsfläche gebildeten Hohlraum aufweist, das mit dem Oberteil fest oder entfernbar verbunden ist oder integral mit diesem ausgebildet ist, wobei das Innenteil einen Innenmantel aufweist, sodass der Innenmantel, das Oberteil und die Aufstandsfläche im Wesentlichen einen inneren Hohlkörper bilden, wobei sich der Insektizidkörper in einem Volumen befindet, das gebildet wird, indem das Volumen des Hohlraums, der von dem Innenmantel, dem Oberteil und der Aufstandsfläche gebildet wird, von dem Volumen des Hohlraums, der von Mantel, dem Oberteil und der Aufstandsfläche gebildet wird, abgezogen wird. Die Durchtrittsöffnung kann dabei beispielsweise gebildet werden, indem der Mantel von der Aufstandsfläche beabstandet ist. Dies kann den vollen Umfang oder einen Teil desselben umfassen. Weiters kann der Mantel im Wesentlichen mit der Aufstandsfläche abschließen und von zumindest einer Durchtrittsöffnung zum Hohlraum hin durchbrochen sein. Der Mantel kann von einer oder mehreren Durchtrittsöffnungen auch zur Aufstandsfläche hin durchbrochen sein.

Diese Vorrichtung stellt eine besonders einfache Ausgestaltung einer Vorrichtung zur Bekämpfung von Insekten, insbesondere kriechender Insekten, beispielsweise Ameisen, dar und kann z.B. einfach auf eine Aufstandsfläche mit einer Ameisenstraßen gestellt werden. Sie ist für Insekten besonders gut zugänglich. Der Insektizidkörper ist dabei beispielsweise zur Abgabe von Insektizid an seine Oberfläche geeignet.

Es ist vorteilhaft, wenn die zumindest eine Durchtrittsöffnung im Mantel vorgesehen ist. Insbesondere können die Durchtrittsöffnungen den Mantel umlaufend vorgesehen sein. Die Richtungen von Durchtrittsöffnungen am Mantel sind vorzugsweise normal zum Mantel. Unter Richtung einer Durchtrittsöffnung wird die Richtung normal zur Öffnungsfläche der Durchtrittsöffnung verstanden. In einer bevorzugten Ausführungsform ist die zumindest eine Durchtrittsöffnung derart vorgesehen, dass eine Richtung normal zur jeweiligen Öffnungsfläche im Wesentlichen parallel zur Aufstandsfläche ist. D.h. die Durchtrittsöffnung ist in eine Richtung im Wesentlichen parallel zur Aufstandsfläche vorgesehen oder, im Fall einer Vielzahl von Durchtrittsöffnungen, ist eine oder mehrere dieser Durchtrittsöffnungen jeweils in eine Richtung parallel zur Aufstandsfläche vorgesehen, wobei mehrere Durchtrittsöffnungen auch in dieselbe Richtung geöffnet sein können.

Es ist vorteilhaft, wenn der Mantel zum Aufstellen auf der Aufstandsfläche vorgesehen ist und das Oberteil in der Funktionsstellung zumindest teilweise von der Aufstandsfläche beabstandet hält. Der Mantel fungiert demgemäß als eine Stütze des Oberteils. Somit wird die Vorrichtung besonders einfach, da keine zusätzliche Stützeinrichtung vorgesehen werden muss und wobei das Oberteil und die Stützeinrichtung, in diesem Fall also der Mantel, eine Struktur bilden.

Bevorzugt ist die Längserstreckung des Mantels normal zur Aufstandsfläche größer als die Längserstreckung des Insektizidkörpers normal zur Aufstandsfläche. Auf diese Weise wird verhindert, dass in der Betriebsstellung der Insektizidkörper für Menschen oder Tiere von außen zugänglich ist, da er vom Mantel (gemeinsam mit dem Oberteil) verdeckt wird. Der Insektizidkörper kann vorteilhafterweise nur von kleinen Tieren, insbesondere Insekten, erreicht werden, die durch die Durchtrittsöffnung passen. Durch eine geeignete Wahl der Durchtrittsöffnung kann die Vorrichtung weiters an das zu bekämpfende Tier angepasst werden.

Vorzugsweise verläuft eine Fläche des Mantels im Wesentlichen normal zur Aufstandsfläche. So kann beispielsweise der gesamte Mantel normal zur Aufstandsfläche sein und kann z.B. hohlzylinderförmig ausgebildet sein. Weiters können die Flächen des Mantels den Mantelflächen eines Prismas, insbesondere eines geraden Prismas, entsprechen. Alternativ kann der Mantel oder eine oder mehrere Flächen des Mantels eine Neigung gegenüber einer Normalen der Aufstandsfläche in Richtung des Hohlraums von zwischen 30 und 60°, bevorzugt von zwischen 40 und 50°, besonders bevorzugt von zwischen 42 und 45° aufweisen, wobei dieser Winkel bevorzugt in Richtung des Hohlraums eingenommen wird. Dabei hat der Mantel vorzugsweise die Form einer Mantelfläche eines Pyramidenstumpfes bzw. eines umgedrehten Pyramidenstumpfes. Der Mantel kann auch aus verschiedenen Formen zusammengesetzt sein. So kann beispielsweise ein oberer Umfangsabschnitt geneigt sein, z.B. wie oben angeführt, und ein unterer Umfangsabschnitt im Wesentlichen normal zur Aufstandsfläche sein, oder diese beiden Umfangsabschnitte sind vertauscht. Insbesondere kann der Mantel aus der Zusammensetzung der Mantelfläche eines Polygons und eines Pyramidenstumpfes, jeweils mit gleicher Anzahl an Seiten, bestehen. Es können auch mehrere verschieden geneigte Umfangsabschnitte vorgesehen sein. Weiters muss der Mantel nicht um den gesamten Umfang dieselbe Neigung haben, sondern es können unterschiedliche Abschnitte des Umfangs unterschiedliche Neigungen aufweisen. Insbesondere kann der Mantel derart ausgebildet sein, dass der Insektizidkörper, gegebenenfalls in Verbindung mit dem Oberteil, gehalten wird.

Bevorzugt hat der Mantel eine Höhe in eine Erstreckungsrichtung normal zur Aufstandsfläche von zwischen 2 und 30 mm, bevorzugt von zwischen 4 und 15 mm, besonders bevorzugt von zwischen 5 und 8 mm. Somit ist die Vorrichtung kompakt. Sie kann beispielsweise unter andere Objekte, die einen geringen Abstand zu einem Boden freilassen, geschoben werden. Weiters kann somit der Insektizidkörper von den Insekten einfach erreicht werden.

Es ist vorteilhaft, wenn der Mantel eine Vielzahl von Durchtrittsöffnungen aufweist, wobei diese Durchtrittsöffnungen vorzugsweise im Wesentlichen im gleichen Abstand bezogen auf eine Richtung bzw. auf Richtungen parallel zur Aufstandsfläche und/oder abschnittsweise parallel zur Oberfläche des Mantels zu benachbarten Durchtrittsöffnungen beabstandet sind, wobei der Abstand zwischen zwei benachbarten Durchtrittsöffnungen bevorzugt kleiner als 5 mm, besonders bevorzugt kleiner als 3 mm, noch mehr bevorzugt kleiner als 1 mm ist. Insbesondere bei Kanten des Mantels kann natürlich von dieser Regelmäßigkeit abgewichen werden. Somit können Abschnitte des Mantels, insbesondere Abschnitte um einen Teil des Umfangs oder um den gesamten Umfang, zu einem großen Teil von Durchtrittsöffnungen ausgemacht werden, wodurch die Insekten in ihrem Zugang zum Hohlraum nicht behindert werden, allerdings der Zugriff durch Menschen oder Haustiere verhindert wird.

Vorzugsweise durchbrechen eine, mehrere oder alle Durchtrittsöffnungen den Mantel zur Aufstandsfläche hin. Ebenfalls vorzugsweise weisen die Durchtrittsöffnungen eine Breite in eine Erstreckungsrichtung im Wesentlichen parallel zur Aufstandsfläche von zwischen 10 und 1 mm, bevorzugt von zwischen 5 und 2 mm, besonders bevorzugt von zwischen 3,5 und 2,5 mm und/oder eine Höhe in eine Erstreckungsrichtung im Wesentlichen normal zur Erstreckungsrichtung der Breite von zwischen 2 und 30 mm, bevorzugt von zwischen 3 und 10 mm, besonders bevorzugt von zwischen 3 und 6 mm auf. Insbesondere soll die Öffnungsfläche und die Erstreckung in jede Richtung der Durchtrittsflächen derart bemessen sein, dass die jeweils zu vernichtenden Insekten durch diese gelangen können, während beispielsweise Finger, auch von Kleinkindern, am Berühren des Insektizidkörpers gehindert werden. Sofern der Mantel auch als Stütze für das Oberteil bzw. den Insektizidkörper dient, sollten die Durchtrittsöffnungen auch derart gewählt sein, dass die Stützfunktion ausreichend robust gewährleistet ist.

In einer bevorzugten Ausführungsform der Vorrichtung ist der Insektizidkörper im Querschnitt im Wesentlichen zylindrisch und hat beispielsweise die Form eines gefüllten Schlauchs, dessen beide Enden verbunden sind. Dabei weist der Insektizidkörper abschnittsweise oder durchgehend vorzugsweise einen Durchmesser von zwischen 2 und 30 mm, besonders bevorzugt von zwischen 3 und 10 mm, noch mehr bevorzugt von zwischen 3 und 5 mm und/oder einen Durchmesser, der bevorzugt zwischen dem 0,1- und 1-fachen, besonders bevorzugt zwischen dem 0,3- und 0,8-fachen, noch mehr bevorzugt zwischen dem 0,4- und 0,7-fachen der Höhe des Mantels in eine Erstreckungsrichtung normal zur Aufstandsfläche liegt, auf. Der Insektizidkörper kann auch aus mehreren getrennten Körpern bestehen. Es ist ebenfalls bevorzugt, wenn der Insektizidkörper eine Form aufweist, die im Wesentlichen einer Kante, die von dem Mantel und dem Oberteil gebildet wird, folgt. Seine Form kann auch nur dem Mantel folgen. Somit liegt der Insektizidkörper an einer Stelle im Hohlraum, die für Insekten besonders einfach zu erreichen ist.

Vorteilhafterweise ist der Insektizidkörper saugfähig. Ebenso ist es vorteilhaft, wenn der Insektizidkörper mit einer Insektizidzusammensetzung imprägniert ist, wobei diese vorzugsweise zwischen 3 und 15 Gewichtsprozent, besonders bevorzugt zwischen 4 und 10 Gewichtsprozent, noch mehr bevorzugt zwischen 6 und 7 Gewichtsprozent Permethrin, das als Kontakt- und/oder Fraßgift wirkt und ein breites Wirkungsspektrum aufweist, zwischen 85 und 97 Gewichtsprozent, besonders bevorzugt zwischen 90 und 96 Gewichtsprozent, noch mehr bevorzugt zwischen 92 und 93 Gewichtsprozent Polyethylen, insbesondere Low-density Polyethylen (LDPE) vorzugsweise mit einer Dichte zwischen 0,90 g/cm³ und 0,94 g/cm³, und/oder zwischen 0 und 3 Gewichtsprozent, besonders bevorzugt zwischen 0,5 und 2 Gewichtsprozent, noch mehr bevorzugt im Wesentlichen 1 Prozent Piperonylbutoxid, welches beispielsweise als Synergist wirkt. Im Stand der Technik ist eine Reihe von möglichen Insektizidzusammensetzungen bekannt, die unterschiedliche Vor- und Nachteile aufweisen. Die oben genannte Zusammensetzung hat sich allerdings für solche Anwendungen, wie für diese Vorrichtung zur Bekämpfung von benötigt, bewährt. Insbesondere ist die Lösung der Insektizidzusammensetzung im Insektizidkörper, insbesondere in Polyethylen, nicht stabil, es tritt im Zeitverlauf und temperaturabhängig anfangs relativ rasch, später langsam, der enthaltene Wirkstoff an die Oberfläche.

Die Vorrichtung weist ein Innenteil im von Mantel, Oberteil und Aufstandsfläche zumindest teilweise gebildeten Hohlraum auf, das mit dem Oberteil fest oder entfernbar verbunden ist oder Bestandteil dessen ist, wobei das Innenteil einen Innenmantel aufweist, sodass der Innenmantel, das Oberteil und die Aufstandsfläche im Wesentlichen einen inneren Hohlraum bilden. Vorzugsweise weist der Innenmantel Durchtrittsöffnungen auf, die bevorzugt abschnittsweise bezogen auf Richtungen parallel zur Aufstandsfläche und/oder normal zum jeweiligen Abschnitt des Mantels im Wesentlichen kongruent mit Durchtrittsöffnungen des Mantels sind. Insbesondere an Eckstellen oder gerundeten Stellen des Innenmantels oder des Mantels wird es jedoch möglicherweise nicht möglich sein, dass die jeweiligen Durchtrittsöffnungen kongruent sind. In diesen Bereich können beispielsweise am Mantel zusätzliche Durchtrittsöffnungen gegenüber dem Innenmantel vorgesehen sein. Der Insektizidkörper befindet sich in einem Volumen, das gebildet wird, indem das Volumen des Hohlraums, der von Innenmantel, Oberteil und Aufstandsfläche gebildet wird, von dem Volumen des Hohlraums, der von Mantel, Oberteil und Aufstandsfläche gebildet wird, abgezogen wird. Somit kann der Innenmantel als Kontaktschutz gegenüber dem Insektizidkörper dienen. Vorteilhafterweise nimmt dabei das Volumen des Hohlraums, der von Innenmantel, Oberteil und Aufstandsfläche begrenzt wird, einen Großteil des Volumens des Hohlraums, der von Mantel, Oberteil und Aufstandsfläche begrenzt wird, ein. Das Innenteil kann auch derart ausgeführt sein, dass es zwar beispielsweise in einem Produktionsschritt mit dem Oberteil verbunden werden kann, diese Verbindung anschließend allerdings nicht mehr gelöst werden kann.

Es ist vorteilhaft, wenn das Innenteil mit der Vorrichtung entfernbar verbunden ist und ein inneres Oberteil aufweist, wobei der Innenmantel im Wesentlichen von einem Umfang des inneren Oberteils absteht. Dabei ist vorzugsweise das innere Oberteil plattenförmig und/oder vieleckig ausgebildet, weist ebenfalls vorzugsweise im Wesentlichen dieselbe Form wie das Oberteil und/oder in jeder Richtung im Wesentlichen parallel zur Aufstandsfläche eine geringere Erstreckung als das Oberteil auf.

In einer vorteilhaften Ausführungsform weisen das Oberteil und das innere Oberteil zusammenwirkende Halteelemente auf. Das Innenteil, insbesondere das innere Oberteil, und das Oberteil können auch derart zusammenwirken, dass das Innenteil in das Oberteil im Zuge der Produktion in das Oberteil gesteckt oder auf andere Weise mit diesem befestigt werden kann, anschließend allerdings nicht mehr entfernt werden kann.

Es ist vorteilhaft, wenn das Oberteil auf einer der Aufstandsfläche abgewandten Oberseite ein Griffelement aufweist, wobei das Griffelement vorzugsweise von einer Ausbuchtung des Oberteils in eine der Aufstandsfläche abgewandten Richtung gebildet wird. Die Ausbuchtung ist dabei bevorzugt dünn und länglich. Mithilfe eines solchen Griffelements kann die Vorrichtung einfach platziert werden.

In einer bevorzugten Ausführungsform werden die zusammenwirkenden Halteelemente von der Ausbuchtung des Oberteils in eine der Aufstandsfläche abgewandten Richtung und einem dieser Ausbuchtung des Oberteils angepassten Vorsprung des inneren Oberteils gebildet. Somit kann die Ausgestaltung der zusammenwirkenden Halteelemente auf besonders einfache Art ausgeführt werden. Die Ausbuchtung bzw. der Vorsprung laufen dafür vorzugsweise in einer der Aufstandsfläche abgewandten Richtung konisch zusammen, um ein Zusammenstecken bzw. Zusammenwirken zu ermöglichen.

Vorteilhafterweise weist die Vorrichtung ein Halteelement zum Halten des Insektizidkörpers auf. Dieses Halteelement kann verschieden ausgeführt sein.

Es ist bevorzugt, wenn das Innenteil, insbesondere der Innenmantel, das Halteelement bildet. Dabei ist der Innenmantel vorzugsweise in einen oberen und einen unteren Innenmantel unterteilt, wobei der untere Innenmantel in der Funktionsstellung näher an der Aufstandsfläche ist, wobei bevorzugt der obere und der untere Innenmantel jeweils den gesamten Umfang des Innenmantels umfassen. Vorteilhafterweise weist der obere Innenmantel eine Neigung gegenüber einer Normalen der Aufstandsfläche in Richtung des Mantels von zwischen 30 und 75°, bevorzugt von zwischen 40 und 50°, besonders bevorzugt von zwischen 42 und 45° auf, wobei insbesondere der Insektizidkörper von dem oberen Innenmantel, dem Mantel und dem Oberteil teilweise eingeschlossen ist und/oder der untere Innenmantel ist im Wesentlichen normal zur Aufstandsfläche. Somit ist es, auch wenn sich die Vorrichtung nicht in der Funktionsstellung befindet, z. B. vor deren Aufbringung oder wenn sie aufgehoben wird, nicht möglich, dass Menschen oder Tiere mit dem Insektizidkörper in Berührung kommen, da dieser zwischen Oberteil, Mantel und oberer Innenmantel eingeschlossen ist, während der untere Innenmantel und der Mantel verhindern, dass aus Richtung der Aufstandsfläche in Funktionsstellung der Insektizidkörper berührt werden kann.

Vorzugsweise bestehen der Mantel und das Oberteil und gegebenenfalls weitere Teile bzw. Elemente der Vorrichtung aus Polypropylen.

In einer bevorzugten Ausführungsform ist das Oberteil plattenförmig und vorzugsweise vieleckig, besonders bevorzugt 4-, 6-, oder 8-eckig, oder ellipsenförmig, besonders bevorzugt kreisförmig, ausgebildet, wobei bevorzugt eine Ober- und/oder eine Unterseite des Oberteils eine Fläche von zwischen 1 und 100 cm², besonders bevorzugt von zwischen 5 und 25 cm², noch mehr bevorzugt von zwischen 10 und 20 cm² aufweist, eine Länge des Oberteils in eine im Wesentlichen parallel zur Aufstandsfläche liegendende Erstreckungsrichtung zwischen 1 und 15 cm, besonders bevorzugt zwischen 2 und 10 cm, noch mehr bevorzugt zwischen 4 und 8 cm beträgt, wobei vorzugsweise eine Breite des Oberteils in eine im Wesentlichen parallel zur Aufstandsfläche und normal zur Erstreckungsrichtung der Länge liegende Erstreckungsrichtung zwischen dem 0,1- und dem 1-fachen, bevorzugt zwischen dem 0,2- und dem 0,8-fachen, besonders bevorzugt zwischen dem 0,4- und 0,6-fachen der Länge beträgt, und/oder das Oberteil konkav ausgeformt ist, wobei vorzugsweise der Winkel zwischen jeder Erstreckungsrichtung des Oberteils und der Aufstandsfläche im Funktionszustand kleiner als 10°, besonders bevorzugt kleiner 5°, noch mehr bevorzugt kleiner als 3° ist. Auf diese Art ist die Vorrichtung besonders kompakt und kostengünstig herzustellen.

Die Erfindung wird nachstehend anhand von in den Zeichnungen dargestellten bevorzugten Ausführungsbeispielen, auf welche sie jedoch keinesfalls beschränkt sein soll, noch näher erläutert. Im Einzelnen zeigen in den Zeichnungen:
Fig. 1 eine bevorzugte Ausführungsform eines Oberteils der Vorrichtung zur Bekämpfung von Insekten in einer Ansicht von schräg oben;
Fig. 2 eine bevorzugte Ausführungsform wie Fig. 1 in einer Ansicht aus einer Richtung parallel zur Aufstandsfläche;
Fig. 3 eine bevorzugte Ausführungsform des Insektizidkörpers in einer Ansicht von oben;
Fig. 4 eine bevorzugte Ausführungsform der Vorrichtung in einem Schnitt normal zur Aufstandsfläche;
Fig. 5 eine ähnliche bevorzugte Ausführungsform wie Fig. 4 in einem Schnitt normal zur Aufstandsfläche;
Fig. 6 eine bevorzugte Ausführungsform der Vorrichtung in einer Ansicht von unten;
Fig. 7 eine bevorzugte Ausführungsform wie Fig. 6 in einer Ansicht von schräg unten;
Fig. 8a eine bevorzugte Ausführungsform des Insektizidkörpers in einer Ansicht von schräg oben;
Fig. 8b eine bevorzugte Ausführungsform des Insektizidkörpers wie in Fig. 8a in einer Ansicht von schräg unten; und
Fig. 8c eine bevorzugte Ausführungsform des Insektizidkörpers wie in Fig. 8a in einer Ansicht von unten.

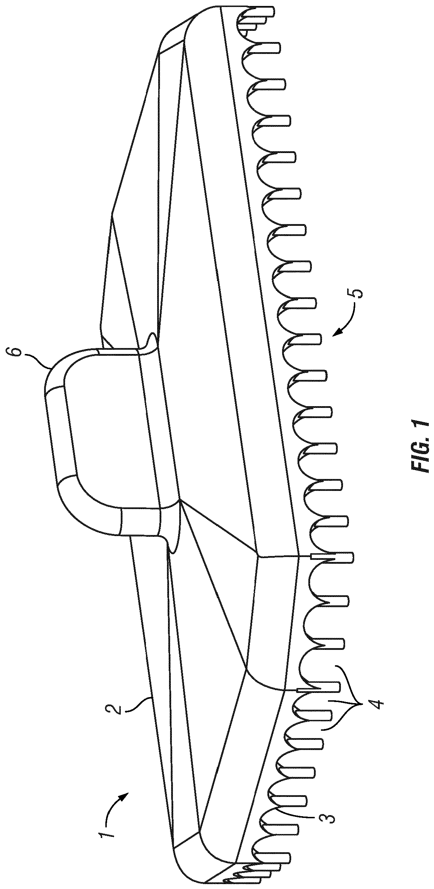

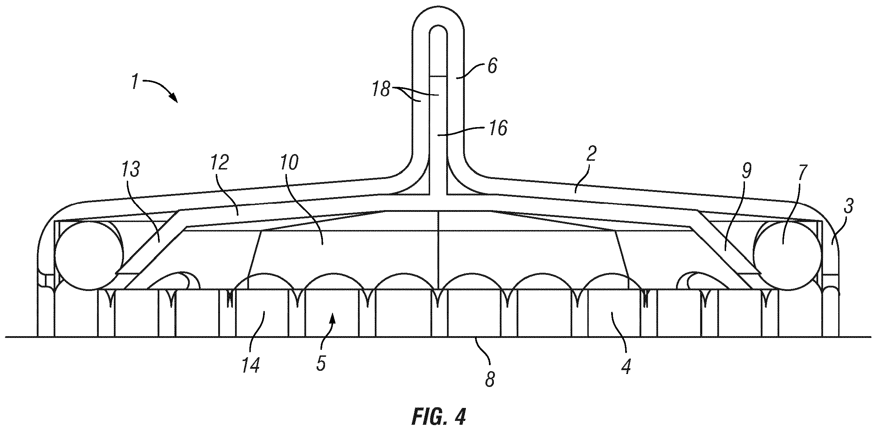

Fig. 1 zeigt eine bevorzugte Ausführungsform eines Oberteils 2 der Vorrichtung 1 zur Bekämpfung von Insekten in einer Ansicht von schräg oben, wobei das Oberteil 2 mit einen von seinem Umfang abstehenden Mantel 3 versehen ist. Dabei weist der Mantel 3 Durchtrittsöffnungen 4 auf, die in dieser Ausführungsform im Wesentlichen regelmäßig beabstandet sind und den Mantel 3 zur Aufstandsfläche 8 (nicht abgebildet) hin durchbrechen. Somit wird in dieser Ausführungsform ein unterer Teil des Mantels 3 im Wesentlichen von Zapfen gebildet, die die Durchtrittsöffnungen 4 begrenzen. Die Vorrichtung 1 steht in einer Funktionsstellung auf dem Mantel, in diesem Fall also auf den Zapfen, auf der Aufstandsfläche 8 auf. Das Oberteil 2, der Mantel 3 und die Aufstandsfläche 8 begrenzen dabei einen Hohlraum 5, der größtenteils von dem Oberteil 2 und dem Mantel 3 verdeckt wird. Der Mantel 3 ist dabei normal zur Aufstandsfläche 8. Das Oberteil 2 ist im Wesentlichen plattenförmig, wobei es abschnittsweise eine geringe Neigung gegenüber einer Parallele zur Aufstandsfläche 8 aufweist, sodass sich eine konkave Form ergibt. Das Oberteil 2 weist weiters im Wesentlichen die Form eines 8-Ecks auf. Der Mantel 3 hat demgemäß im Wesentlichen die Form einer Mantelfläche eines Zylinders mit 8-eckiger Grundfläche. Vom Oberteil 2 zum Mantel 3 ist ein gerundeter Übergang vorgesehen. Weiters weist das Oberteil 2 ein Griffelement 6 auf seiner der Aufstandsfläche 8 abgewandten Aufstandsfläche auf, das als längliche Ausbuchtung des Oberteils 2 ausgeführt ist. Die Längserstreckungsrichtung des Mantels 3 normal zur Aufstandsfläche 8 ist größer als die Längserstreckungsrichtung eines Insektizidkörpers 7 (vgl. Fig. 4).

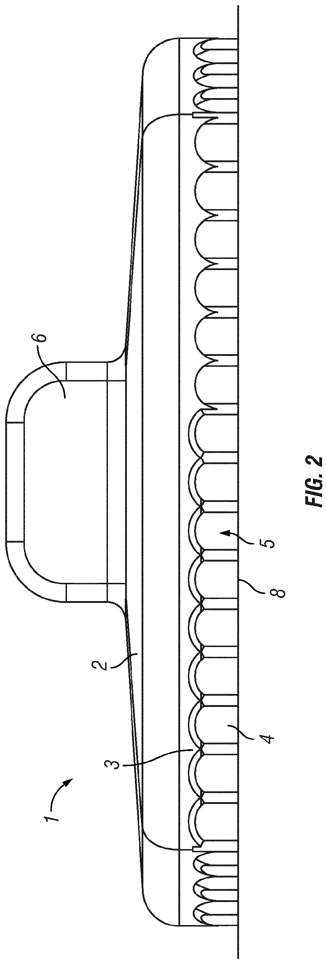

Fig. 2 zeigt dieselbe Ausführungsform des Oberteils 2 der Vorrichtung 1 zur Bekämpfung von Insekten wie Fig. 1 in einer Ansicht aus einer Richtung parallel zur Aufstandsfläche 8. Die Vorrichtung weist ein Oberteil 2, dessen konkave Form in Fig. 2 ersichtlich ist, und einen Mantel 3 mit Durchtrittsöffnungen 4 auf. Die Durchtrittsöffnungen 4 sind im Wesentlichen regelmäßig ausgeführt und durchbrechen den Mantel zur Aufstandsfläche 8 hin. Die Vorrichtung steht als auf den in diesem Umfangsbereich verbliebenen Zapfen im Mantel 3. Das Oberteil 2 weist ein Griffelement 6 auf, das im Wesentlichen als Ausbuchtung des Oberteils 2 in eine der Aufstandsfläche 8 abgewandte Richtung ausgeführt ist. Das Oberteil 2, der Mantel 3 und die Aufstandsfläche 8 begrenzen im Wesentlichen einen Hohlraum 5.

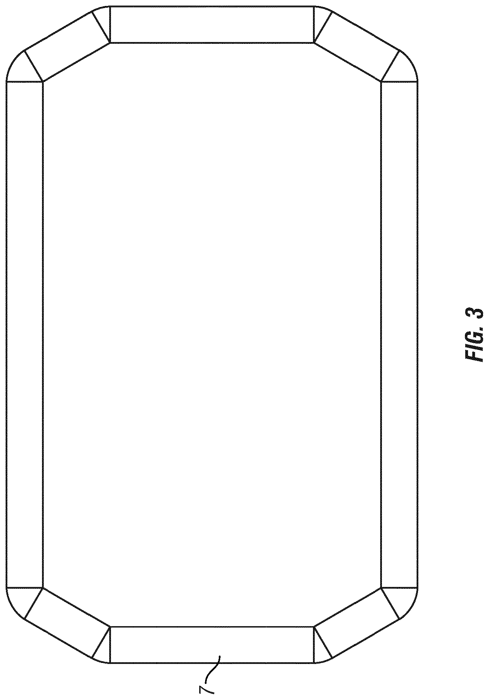

Fig. 3 zeigt eine Ausführungsform des Insektizidkörpers 7, wie dieser beispielsweise bei einer der Ausführungsformen der Vorrichtung 1 der Fig. 1 und 2 verwendet werden kann, in einer Ansicht aus einer Richtung normal zur Aufstandsfläche 8 (nicht abgebildet). Der Insektizidkörper 7 hat dabei insbesondere eine solche Form, dass er einer Kante, die von einem Oberteil 2 und einem Mantel 3 gebildet wird, folgt. Der Insektizidkörper 7 weist einen im Wesentlichen zylindrischen Querschnitt auf und der Durchmesser des Insektizidkörpers 7 ist geringer als die Längserstreckung des Mantels 3 normal zur Aufstandsfläche. Weiters ist der Insektizidkörper 7 derart ausgebildet, dass er, wenn er im von Oberteil 2, Mantel 3 und Aufstandsfläche 8 begrenzten Hohlraum angebracht ist, ausreichend Platz zum Anbringen eines Innenteils 10 (nicht abgebildet) lässt.

Fig. 4 zeigt eine Ausführungsform der Vorrichtung 1 zur Bekämpfung von Insekten in einem Schnitt durch eine Ebene normal zur Aufstandsfläche 8 und normal zur Längserstreckungsrichtung eines Griffelements 6 des Oberteils 2. Die Vorrichtung 1 weist das Oberteil 2 und einen im Wesentlichen von dessen Umfang abstehenden Mantel 3 auf, wobei das Oberteil 2 im Wesentlichen parallel zur Aufstandsfläche 8 und konkav ist, und der Mantel 3 im Wesentlichen normal zur Aufstandsfläche 8 ist. Der Insektizidkörper 7 ist im Querschnitt zylindrisch und folgt einer von Oberteil 2 und Mantel 3 gebildeten Kante im Hohlraum 5, der von dem Oberteil 2, dem Mantel 3 und der Aufstandsfläche 8 begrenzt wird. Das Griffelement 6 ist als Ausbuchtung des Oberteils 2 ausgebildet.

Weiters weist die Vorrichtung 1 in Fig. 4 einen Innenteil 10 mit einem inneren Oberteil 12 und einem Innenmantel 13 im Hohlraum 5 auf. Das innere Oberteil 12 hat im Wesentlichen dieselbe Form wie das Oberteil 2, allerdings mit geringerer Erstreckung in die Richtungen parallel zur Aufstandsfläche 8. Das innere Oberteil 12 ist somit auch leicht konkav ausgeführt. In dieser Ausführungsform ist das Innenteil 10 mit der Vorrichtung 1, insbesondere mit dem Oberteil 2, mittels zusammenwirkender Halteelemente 18 entfernbar verbunden. Die zusammenwirkenden Halteelemente 18 werden vom als Ausbuchtung ausgeführten Griffelement 6 und einem in diese passenden Vorsprung 16 des inneren Oberteils 12 gebildet.

Der Innenmantel 13 steht im Wesentlichen von einem Umfang des inneren Oberteils 12 ab. Der Innenmantel 13 hat eine Neigung gegenüber einer Normalen der Aufstandsfläche 8 in Richtung des Mantels 3 von ungefähr 45°. Der Innenmantel 13, das Oberteil 2 bzw. das innere Oberteil 12 begrenzen wiederum einen Hohlraum, wobei der Innenmantel 12 gegenüber diesem Hohlraum von einer Durchtrittsöffnung 14 durchbrochen wird. In dieser Ausführungsform wird die Durchtrittsöffnung 14 gebildet, indem der Innenmantel 13 über einen vollen Umfang durchbrochen wird, d.h. der Innenmantel 13 nicht bis zur Aufstandsfläche 8 reicht. Weiters sind in Fig. 4 im Innenmantel 13 Bögen erkennbar. In einer alternativen Ausführungsform wäre es möglich, die Enden dieser Bögen zapfenförmig bis zur Aufstandsfläche 8 zu verlängern, wodurch eine Vielzahl an Durchtrittsöffnungen 14 gebildet würde, die im Wesentlichen kongruent bezogen auf Richtungen parallel zur Aufstandsfläche bzw. abschnittsweise normal zum Mantel 3 mit Durchtrittsöffnungen 4 des Mantels 3 wären. In dieser alternativen Ausführungsform wäre der Innenmantel 13 beispielsweise als oberer Innenmantel und unterer Innenmantel ausgebildet, wobei der obere Innenmantel dem in Fig. 4 abgebildeten Innenmantel 13 entsprechen könnte, also eine Neigung gegenüber einer Normalen der Aufstandsfläche 8 in Richtung des Mantels 3 von ungefähr 45° haben könnte, wohingegen der untere Innenmantel abschnittsweise parallel zum Mantel 3 bzw. normal zur Aufstandsfläche 8 sein könnte.

Die Vorrichtung 1 weist in Fig. 4 weiters ein Halteelement 9 zum Halten des Insektizidkörpers 7 auf, wobei das Halteelement 9 in dieser Ausführungsform vom Innenmantel 13 gebildet wird. In der im vorigen Absatz angeführten alternativen Ausführungsform könnte das Halteelement 9 zum Halten des Insektizidkörpers 7 vom oberen Innenmantel gebildet werden.

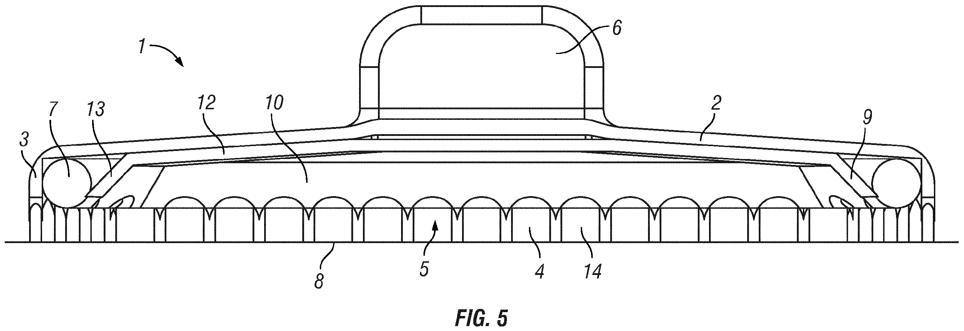

Fig. 5 zeigt die Vorrichtung 1 zur Bekämpfung von Insekten wie jene im Zusammenhang mit Fig. 4 beschriebene in einem Schnitt durch eine Ebene normal zur Aufstandsfläche 8 und parallel und parallelverschoben zur Längserstreckung des Griffelements 6, sodass der Vorsprung 16 des inneren Oberteils 12 nicht sichtbar ist. Die Vorrichtung 1 ist analog zur Beschreibung in Zusammenhang mit Fig. 4 aufgebaut. Aus Fig. 4 und Fig. 5 ist erkennbar, dass das Verhältnis zweier zueinander normaler Längserstreckungen des Oberteils bzw. des inneren Oberteils parallel zur Aufstandsfläche ungefähr 0,5 beträgt.

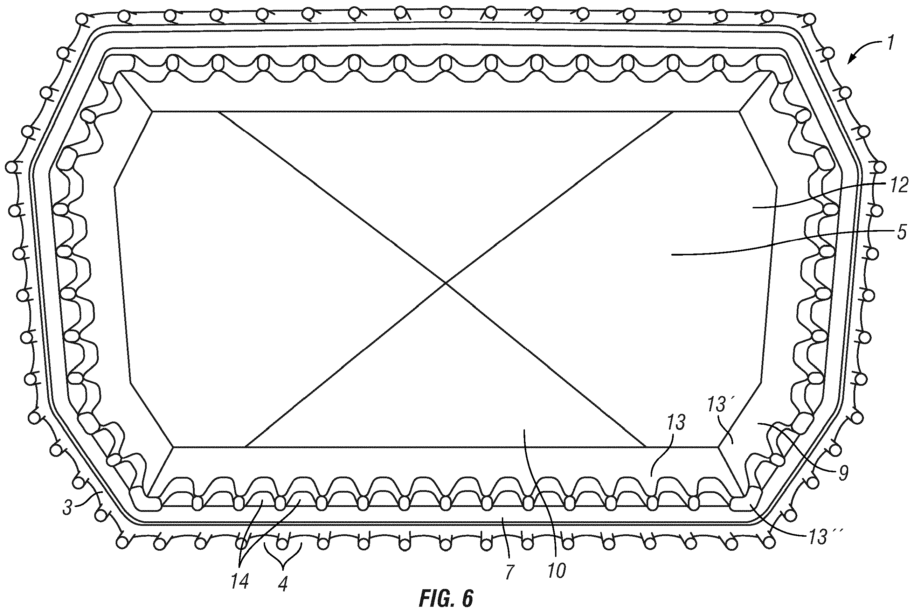

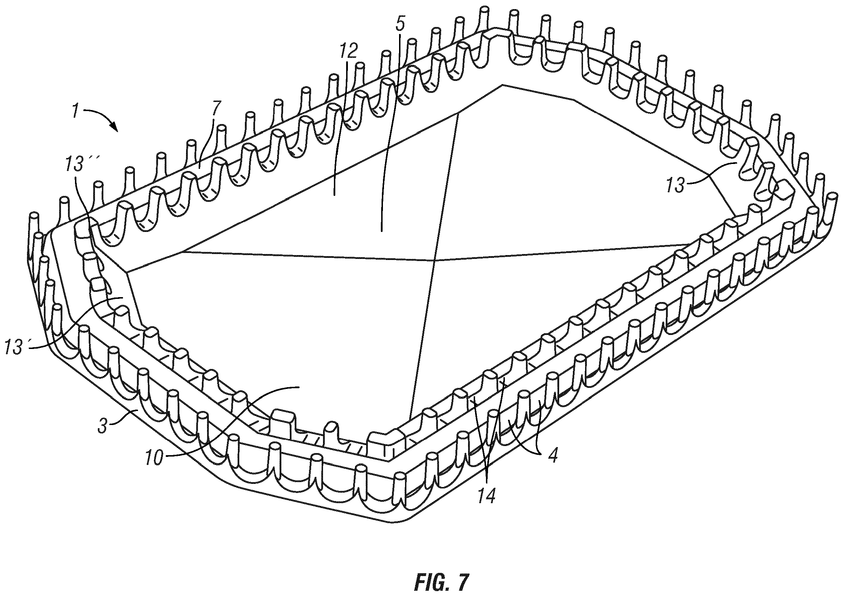

Fig. 6 zeigt eine Ausführungsform der Vorrichtung 1 zur Bekämpfung von Insekten in einer Ansicht von unten, d.h. aus der Richtung, in der sich in Funktionsstellung die Aufstandsfläche 8 (nicht dargestellt), befindet bzw. normal zur Aufstandsfläche 8. Fig. 7 zeigt dieselbe Ausführungsform der Vorrichtung 1 zur Bekämpfung von Insekten in einer Ansicht von schräg unten. Zu sehen ist der Mantel 3 mit Durchtrittsöffnungen 4. Einer Kante des Mantels 3 folgt der Insektizidkörper 7. Weiters ist das Innenteil 10 zu sehen, das ein inneres Oberteil 12 und einen von diesem abstehenden Innenmantel 13 aufweist. Der Innenmantel 13 ist in zwei Abschnitte unterteilt, die jeweils den gesamten Umfang des Innenmantels 13 umfassen, und der Innenmantel 13 somit einen unteren Innenmantel 13' und einen oberen Innenmantel 13" aufweist. Der obere Innenmantel 13" weist eine Neigung von ungefähr 45° gegenüber einer Normalen der Aufstandsfläche 8 in Richtung des Mantels 3 auf. Der untere Innenmantel 13' ist ungefähr normal zur Aufstandsfläche 8. Dabei dient der obere Innenmantel 13" auch als Halteelement 9 für den Insektizidkörper 7. Der untere Innenmantel 13' ist von den Durchtrittsöffnungen 14 des Innenmantel 13 durchbrochen, wobei diese jeweils im Wesentlichen kongruent mit den Durchtrittsöffnungen 4 des Mantels 3 sind. Insbesondere bei den Kanten des Mantels 3 bzw. des Innenmantels 13 sind selbstverständlich Abweichungen von dieser Kongruenz möglich bzw. notwendig. Da der Mantel 3 hier einen größeren Umfang als der Innenmantel 13 aufweist, kann dieser bei im Wesentlichen gleicher Ausgestaltung aller Durchtrittsöffnungen 4, 14 eine größere Anzahl an Durchtrittsöffnungen 4 aufweisen als der Innenmantel 13 Durchtrittsöffnungen 14. Die Durchtrittsöffnungen 4, 14 sind im Wesentlichen regelmäßig beabstandet und haben dieselbe Form, wobei Abweichungen insbesondere bei den Kanten des Mantels 3 bzw. des Innenmantels 13 möglich sind. Es ist ebenfalls der Hohlraum 5 bezeichnet, der in der Funktionsstellung von dem Oberteil 2 (nicht sichtbar), dem Mantel 3 und der Aufstandsfläche 8 begrenzt wird. Der Innenmantel 13, das innere Oberteil 12 bzw. das Oberteil 2 und die Aufstandsfläche begrenzen innerhalb dieses Hohlraums einen weiteren, kleineren Hohlraum. Die unteren Umfänge des Mantels 3 und des Innenmantels 13 werden somit im Wesentlichen von Zapfen ausgemacht, wobei diese einerseits dafür sorgen, dass Insekten unter die Vorrichtung gelangen können, indem das Oberteil 2 bzw. das innere Oberteil 12 getragen und Durchtrittsöffnungen 4, 14 gebildet werden. Andererseits verhindern sie besonders effizient, dass Menschen oder Tiere mit dem Insektizidkörper in Berührung kommen können. Dafür ist der Abstand zwischen Mantel und Innenmantel, d.h. in dieser Ausführungsform zwischen deren jeweiligen Zapfen, an deren Unterseite, d.h. an deren jeweiligen Umfang, der in der Funktionsstellung der Aufstandsfläche am nächsten ist, ausreichend klein, wobei der Abstand zwischen dem Mantel und dem Innenmantel an deren untersten Umfang bevorzugt kleiner als 10 mm, besonders bevorzugt kleiner als 7 mm, noch mehr bevorzugt kleiner als 4 mm ist.

Es sei auf eine alternative Ausführungsform hingewiesen, in der der Mantel 2 in Funktionsstellung nicht die Aufstandsfläche 8 berührt. In diesem Fall kann die Vorrichtung 1 beispielsweise vom Innenmantel 12 oder von einer zusätzlichen Stützvorrichtung, z.B. einer Stütze bzw. Stützen im Hohlkörper 5, gestützt werden.

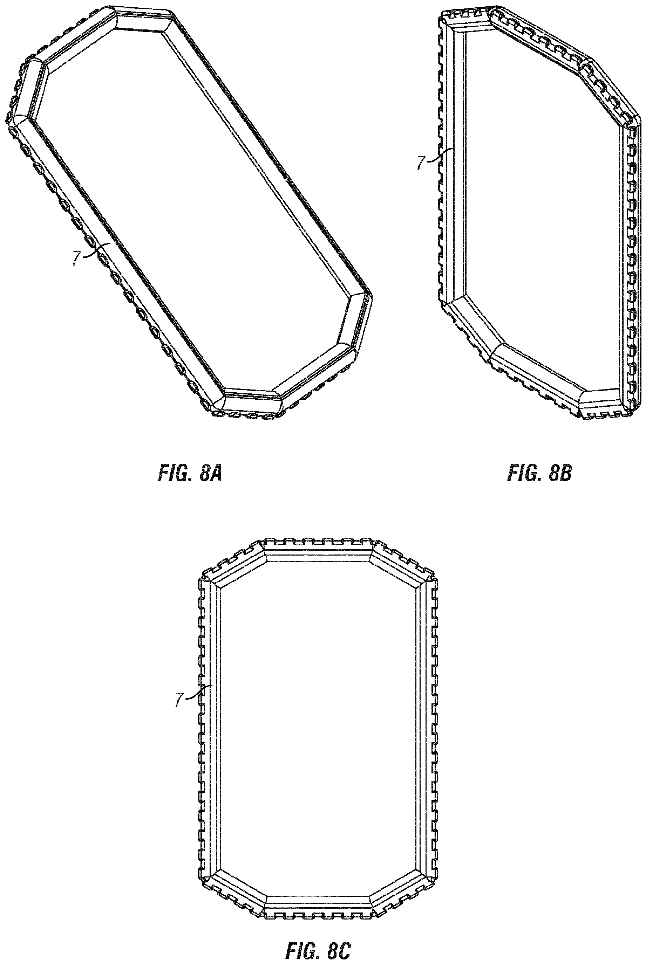

Fig. 8a zeigt eine bevorzugte Ausführungsform des Insektizidkörpers 7 in einer Ansicht von schräg oben. Fig. 8b zeigt dieselbe Ausführungsform des Insektizidkörpers 7 in einer Ansicht von schräg unten. Fig. 8c zeigt ebenfalls dieselbe Ausführungsform des Insektizidkörpers 7 in einer Ansicht von unten. Der Insektizidkörper 7 kann in dieser bevorzugten Ausführungsform beispielsweise in den Ausführungsformen der Vorrichtung 1 der Fig. 1, 2 und 4 bis 7 angewandt werden. Der Insektizidkörper 7 hat dabei insbesondere eine solche Form, dass er einer Kante, die von einem Oberteil 2 und einem Mantel 3 gebildet wird, folgt. Der Insektizidkörper 7 weist einen im Wesentlichen zylindrischen Querschnitt auf und der Durchmesser des Insektizidkörpers 7 ist geringer als die Längserstreckung des Mantels 3 normal zur Aufstandsfläche. Weiters ist der Insektizidkörper 7 derart ausgebildet, dass er, wenn er im von Oberteil 2, Mantel 3 und Aufstandsfläche 8 begrenzten Hohlraum angebracht ist, ausreichend Platz zum Anbringen eines Innenteils 10 lässt. Weiters weist der Insektizidkörper 7 ein Vielzahl kleiner Vorsprünge auf, die, wenn der Insektizidkörper 7 in der Vorrichtung 1 angebracht ist, in Richtung des Mantels 3 schauen bzw. aus dem Insektizidkörper 7 hinaus stehen. Diese Vorsprünge können helfen, den Insektizidkörper 7 zu stabilisieren, insbesondere indem sie mit den Durchtrittsöffnungen 4 des Mantels 3 in Eingriff kommen. Dabei sollen diese Zapfen jedoch vorzugsweise nicht von außen zugänglich sein, d.h. sie müssen kurz genug sein.

Die in den Figuren dargestellten und im Zusammenhang mit diesen erläuterten Ausführungsbeispiele dienen der Erläuterung der Erfindung und sind für diese nicht beschränkend.

## Patentansprüche

1. Vorrichtung (1) zur Bekämpfung von Insekten mit einem Oberteil (2), einem im Wesentlichen von einem Umfang des Oberteils (2) abstehenden Mantel (3) und einem Insektizidkörper (7), wobei das Oberteil (2), der Mantel (3) und eine Aufstandsfläche (8) in einer Funktionsstellung teilweise einen Hohlraum (5) begrenzen, wobei die Vorrichtung (1) im Hohlraum (5) den Insektizidkörper (7) aufweist, und zumindest eine Durchtrittsöffnung (4) zum Hohlraum (5) vorgesehen ist, **dadurch gekennzeichnet, dass** die Vorrichtung (1) ein Innenteil (10) im von Mantel (3), Oberteil (2) und Aufstandsfläche (8) gebildeten Hohlraum (5) aufweist, das mit dem Oberteil (2) fest oder entfernbar verbunden ist oder integral mit diesem ausgebildet ist, wobei das Innenteil (10) einen Innenmantel (13) aufweist, sodass der Innenmantel (13), das Oberteil (2) und die Aufstandsfläche (8) im Wesentlichen einen inneren Hohlkörper bilden, wobei sich der Insektizidkörper (7) in einem Volumen befindet, das gebildet wird, indem das Volumen des Hohlraums, der von dem Innenmantel (13), dem Oberteil (2) und der Aufstandsfläche (8) gebildet wird, von dem Volumen des Hohlraums, der von Mantel (3), dem Oberteil (2) und der Aufstandsfläche (8) gebildet wird, abgezogen wird.

2. Vorrichtung (1) nach Anspruch 1, **dadurch gekennzeichnet, dass** die zumindest eine Durchtrittsöffnung (4) im Mantel (3) vorgesehen ist, wobei vorzugsweise die zumindest eine Durchtrittsöffnung (4) derart angeordnet ist, dass eine Richtung normal zur Öffnungsfläche der jeweiligen Durchtrittsöffnung (4) im Wesentlichen parallel zur Aufstandsfläche (8) ist.

3. Vorrichtung (1) nach einem der vorhergehenden Ansprüche, **dadurch gekennzeichnet, dass** der Mantel (3) zum Aufstellen auf der Aufstandsfläche (8) vorgesehen ist und das Oberteil (2) in der Funktionsstellung zumindest teilweise von der Aufstandsfläche (8) beabstandet hält.

4. Vorrichtung (1) nach einem der vorhergehenden Ansprüche, **dadurch gekennzeichnet, dass** die Längserstreckung des Mantels (3) normal zur Aufstandsfläche (8) größer ist als die Längserstreckung des Insektizidkörpers (7) normal zur Aufstandsfläche (8).

5. Vorrichtung (1) nach einem der vorhergehenden Ansprüche, **dadurch gekennzeichnet, dass**
eine Fläche des Mantels (3) im Wesentlichen normal zur Aufstandsfläche (8) verläuft ,
der Mantel (3) eine Neigung gegenüber einer Normalen der Aufstandsfläche (8) in Richtung des Hohlkörpers (5) von zwischen 30 und 60°, bevorzugt von zwischen 40 und 50°, besonders bevorzugt von zwischen 42 und 45° aufweist und/oder
der Mantel (3) eine Höhe in eine Erstreckungsrichtung normal zur Aufstandsfläche (8) von zwischen 2 und 30 mm, bevorzugt von zwischen 4 und 15 mm, besonders bevorzugt von zwischen 5 und 8 mm aufweist.

6. Vorrichtung (1) nach einem der vorhergehenden Ansprüche, **dadurch gekennzeichnet, dass** der Mantel (3) eine Vielzahl von Durchtrittsöffnungen (4) aufweist, wobei diese Durchtrittsöffnungen (4) vorzugsweise im Wesentlichen im gleichen Abstand bezogen auf eine Richtung parallel zur Aufstandsfläche (8) zu benachbarten Durchtrittsöffnungen (4) beabstandet sind, wobei der Abstand zwischen zwei benachbarten Durchtrittsöffnungen (4) bevorzugt kleiner als 5 mm, besonders bevorzugt kleiner als 3 mm, noch mehr bevorzugt kleiner als 1 mm ist.

7. Vorrichtung (1) nach einem der vorhergehenden Ansprüche, **dadurch gekennzeichnet, dass** die Durchtrittsöffnungen (4)
den Mantel (3) zur Aufstandsfläche (8) hin durchbrechen und/oder
eine Breite in eine Erstreckungsrichtung im Wesentlichen parallel zur Aufstandsfläche (8) von zwischen 10 und 1 mm, bevorzugt von zwischen 5 und 2 mm, besonders bevorzugt von zwischen 3,5 und 2,5 mm aufweisen, und vorzugsweise eine Höhe in eine Erstreckungsrichtung im Wesentlichen normal zur Erstreckungsrichtung der Breite von zwischen 2 und 30 mm, bevorzugt von zwischen 3 und 10 mm, besonders bevorzugt von zwischen 3 und 6 mm aufweisen.

8. Vorrichtung (1) nach einem der vorhergehenden Ansprüche, **dadurch gekennzeichnet, dass** der Insektizidkörper (7) im Querschnitt im Wesentlichen zylindrisch ist, wobei der Insektizidkörper (7) bevorzugt
einen Durchmesser von zwischen 2 und 30 mm, besonders bevorzugt von zwischen 3 und 10 mm, noch mehr bevorzugt von zwischen 3 und 5 mm und/oder einen Durchmesser, der bevorzugt zwischen dem 0,1- und 1-fachen, besonders bevorzugt zwischen dem 0,3- und 0,8-fachen, noch mehr bevorzugt zwischen dem 0,4- und 0,7-fachen der Höhe des Mantels (3) in eine Erstreckungsrichtung normal zur Aufstandsfläche (8) liegt, aufweist und/oder
eine Form aufweist, die im Wesentlichen einer Kante, die von dem Mantel (3) und dem Oberteil (2) gebildet wird, folgt.

9. Vorrichtung (1) nach einem der vorhergehenden Ansprüche, **dadurch gekennzeichnet, dass** der Insektizidkörper (7) saugfähig ist und/oder mit einer Insektizidzusammensetzung imprägniert ist, wobei die Insektizidzusammensetzung vorzugsweise
zwischen 3 und 15 Gewichtsprozent, besonders bevorzugt zwischen 4 und 10 Gewichtsprozent, noch mehr bevorzugt im Wesentlichen zwischen 6 und 7 Gewichtsprozent Permethrin,
zwischen 85 und 97 Gewichtsprozent, besonders bevorzugt zwischen 90 und 96 Gewichtsprozent, noch mehr bevorzugt im Wesentlichen zwischen 92 und 93 Gewichtsprozent Polyethylen, insbesondere Low-density Polyethylen (LDPE) vorzugsweise mit einer Dichte zwischen 0,90 g/cm³ und 0,94 g/cm³, und/oder
zwischen 0 und 3 Gewichtsprozent, besonders bevorzugt zwischen 0,5 und 2 Gewichtsprozent, noch mehr bevorzugt im Wesentlichen 1 Gewichtsprozent Piperonylbutoxid aufweist.

10. Vorrichtung (1) nach einem der vorhergehenden Ansprüche, **dadurch gekennzeichnet, dass** der Innenmantel (13) eine oder mehrere Durchtrittsöffnungen (14) aufweist, die besonders bevorzugt abschnittsweise bezogen auf Richtungen parallel zur Aufstandsfläche (8) kongruent mit der einen oder mehreren Durchtrittsöffnungen (4) des Mantels (3) ist bzw. sind.

11. Vorrichtung (1) nach einem der vorhergehenden Ansprüche, **dadurch gekennzeichnet, dass** das Innenteil (10) mit der Vorrichtung (1) entfernbar verbunden ist und ein inneres Oberteil (12) aufweist, wobei
der Innenmantel (13) im Wesentlichen von einem Umfang des inneren Oberteils (12) absteht und
vorzugsweise das innere Oberteil (12) plattenförmig und/oder vieleckig ausgebildet ist, im Wesentlichen dieselbe Form wie das Oberteil (2) aufweist und/oder in jeder Richtung im Wesentlichen parallel zur Aufstandsfläche (8) eine geringere Erstreckung als das Oberteil (2) aufweist.

12. Vorrichtung (1) nach Anspruch 11, **dadurch gekennzeichnet, dass** das Oberteil (2) und das innere Oberteil (12) zusammenwirkendende Halteelemente (18) aufweisen, wobei bevorzugt das Oberteil (2) auf einer der Aufstandsfläche (8) abgewandten Oberseite ein Griffelement (6) aufweist, wobei das Griffelement (6) vorzugsweise von einer Ausbuchtung des Oberteils (2) in eine der Aufstandsfläche (8) abgewandten Richtung gebildet wird, und wobei besonders bevorzugt die zusammenwirkenden Halteelemente (18) von der Ausbuchtung des Oberteils (2) in eine der Aufstandsfläche (8) abgewandten Richtung und einem dieser Ausbuchtung des Oberteils (2) angepassten Vorsprung des inneren Oberteils (12) gebildet werden.

13. Vorrichtung (1) nach einem der vorhergehenden Ansprüche, **dadurch gekennzeichnet, dass** die Vorrichtung (1) ein Halteelement (9) zum Halten des Insektizidkörpers (7) aufweist.

14. Vorrichtung (1) nach einem der Ansprüche 1 bis 13 und Anspruch 15, **dadurch gekennzeichnet, dass** der Innenmantel (13) das Halteelement (9) zum Halten des Insektizidkörpers bildet, wobei vorzugsweise
der Innenmantel (3) in einen oberen und einen unteren Innenmantel (13", 13') unterteilt ist, die bevorzugt jeweils den gesamten Umfang des Innenmantels (13) umfassen,
der obere Innenmantel (13'') eine Neigung gegenüber einer Normalen der Aufstandsfläche (8) in Richtung des Mantels (3) von zwischen 30 und 60°, bevorzugt von zwischen 40 und 50°, besonders bevorzugt von zwischen 42 und 45° aufweist, wobei insbesondere der Insektizidkörper (7) von dem oberen Innenmantel (13''), dem Mantel (3) und dem Oberteil (2) teilweise eingeschlossen ist, und/oder
der untere Innenmantel (13') im Wesentlichen normal zur Aufstandsfläche (8) ist.

15. Vorrichtung (1) nach einem der vorhergehenden Ansprüche, **dadurch gekennzeichnet, dass** das Oberteil (2) plattenförmig und vorzugsweise vieleckig, besonders bevorzugt 4-, 6-, oder 8-eckig, oder ellipsenförmig, besonders bevorzugt im Wesentlichen kreisförmig, ausgebildet ist, wobei bevorzugt
eine Ober- und/oder eine Unterseite des Oberteils (2) eine Fläche von zwischen 1 und 100 cm², besonders bevorzugt von zwischen 5 und 25 cm², noch mehr bevorzugt von zwischen 10 und 20 cm² aufweist,
eine Länge des Oberteils (2) in eine im Wesentlichen parallel zur Aufstandsfläche (8) liegende Erstreckungsrichtung zwischen 1 und 15 cm, besonders bevorzugt zwischen 2 und 10 cm, noch mehr bevorzugt zwischen 4 und 8 cm beträgt, wobei vorzugsweise eine Breite des Oberteils (2) in eine im Wesentlichen parallel zur Aufstandsfläche (8) und normal zur Erstreckungsrichtung der Länge liegende Erstreckungsrichtung zwischen dem 0,1- und dem 1-fachen, bevorzugt zwischen dem 0,2-und dem 0,8-fachen, besonders bevorzugt zwischen dem 0,4- und 0,6-fachen der Länge beträgt, und/oder
das Oberteil (2) konkav ausgeformt ist, wobei vorzugsweise der Winkel zwischen jeder Erstreckungsrichtung des Oberteils (2) und der Aufstandsfläche (8) im Funktionszustand kleiner als 10°, besonders bevorzugt kleiner 5°, noch mehr bevorzugt kleiner als 3° ist.

## Claims

1. Device (1) for controlling insects, comprising an upper part (2), a casing (3) protruding substantially from a periphery of the upper part (2) and an insecticide body (7), the upper part (2), the casing (3) and a contact surface (8) partly delimiting a cavity (5) in a functional position, the device (1) having the insecticide body (7) in the cavity (5), and at least one through-opening (4) to the cavity (5) being provided, **characterised in that** the device (1) has an inner part (10) in the cavity (5) formed by the casing (3), upper part (2) and contact surface (8), which inner part is rigidly or removably connected to or formed integrally with the upper part (2), the inner part (10) having an inner casing (13) such that the inner casing (13), the upper part (2) and the contact surface (8) substantially form an inner hollow body, the insecticide body (7) being located in a volume which is formed by the volume of the cavity formed by the inner casing (13), the upper part (2) and the contact surface (8) being subtracted from the volume of the cavity formed by the casing (3), the upper part (2) and the contact surface (8).

2. Device (1) according to claim 1, **characterised in that** the at least one through-opening (4) is provided in the casing (3), the at least one through-opening (4) preferably being arranged in such a way that a direction normal to the opening surface of the through-opening (4) is substantially parallel to the contact surface (8).

3. Device (1) according to either of the preceding claims, **characterised in that** the casing (3) is intended to be placed on the contact surface (8) and keeps the upper part (2) at least partly spaced apart from the contact surface (8) in the functional position.

4. Device (1) according to any of the preceding claims, **characterised in that** the longitudinal extension of the casing (3) normal to the contact surface (8) is greater than the longitudinal extension of the insecticide body (7) normal to the contact surface (8).

5. Device (1) according to any of the preceding claims, **characterised in that** one surface of the casing (3) extends substantially normal to the contact surface (8), the casing (3) has an inclination relative to a normal of the contact surface (8) in the direction of the hollow body (5) of between 30 and 60°, preferably between 40 and 50°, particularly preferably between 42 and 45° and/or the casing (3) has a height in an extension direction normal to the contact surface (8) of between 2 and 30 mm, preferably between 4 and 15 mm, particularly preferably between 5 and 8 mm.

6. Device (1) according to any of the preceding claims, **characterised in that** the casing (3) has a large number of through-openings (4), these through-openings (4) preferably being spaced apart from adjacent through-openings (4) substantially at the same distance relative to a direction parallel to the contact surface (8), the distance between two adjacent through-openings (4) preferably being less than 5 mm, particularly preferably less than 3 mm, even more preferably less than 1 mm.

7. Device (1) according to any of the preceding claims, **characterised in that** the through-openings (4) pass through the casing (3) towards the contact surface (8) and/or have a width in an extension direction substantially parallel to the contact surface (8) of between 10 and 1 mm, preferably between 5 and 2 mm, particularly preferably between 3.5 and 2.5 mm, and preferably a height in an extension direction substantially normal to the extension direction of the width of between 2 and 30 mm, preferably between 3 and 10 mm, particularly preferably between 3 and 6 mm.

8. Device (1) according to any of the preceding claims, **characterised in that** the insecticide body (7) is substantially cylindrical in cross section, the insecticide body (7) preferably having a diameter of between 2 and 30 mm, particularly preferably between 3 and 10 mm, even more preferably between 3 and 5 mm, and/or having a diameter which is preferably between 0.1 and 1 times, particularly preferably between 0.3 and 0.8 times, even more preferably between 0.4 and 0.7 times the height of the casing (3) in an extension direction normal to the contact surface (8) and/or having a shape which substantially follows an edge that is formed by the casing (3) and the upper part (2).

9. Device (1) according to any of the preceding claims, **characterised in that** the insecticide body (7) is absorbent and/or is impregnated with an insecticide composition, the insecticide composition preferably having between 3 and 15 wt.%, particularly preferably between 4 and 10 wt.%, even more preferably substantially between 6 and 7 wt.%, permethrin, between 85 and 97 wt.%, particularly preferably between 90 and 96 wt.%t, even more preferably substantially between 92 and 93 wt.%, polyethylene, in particular low-density polyethylene (LDPE) preferably having a density between 0.90 g/cm³ and 0.94 g/cm³, and/or between 0 and 3 wt.%, particularly preferably between 0.5 and 2 wt.%, even more preferably substantially 1 wt.%, piperonyl butoxide.

10. Device (1) according to any of the preceding claims, **characterised in that** the inner casing (13) has one or more through-openings (14) which, particularly preferably in portions, is or are congruent with the one or more through-openings (4) of the casing (3) relative to directions parallel to the contact surface (8).

11. Device (1) according to any of the preceding claims, **characterised in that** the inner part (10) is removably connected to the device (1) and has an inner upper part (12), the inner casing (13) protruding substantially from a periphery of the inner upper part (12) and the inner upper part (12) preferably being planar and/or polygonal, having substantially the same shape as the upper part (2) and/or having a lesser extension than the upper part (2) in any direction substantially parallel to the contact surface (8).

12. Device (1) according to claim 11, **characterised in that** the upper part (2) and the inner upper part (12) have interacting holding elements (18), with preferably the upper part (2) having a gripping element (6) on an upper side facing away from the contact surface (8), the gripping element (6) preferably being formed by a protrusion of the upper part (2) in a direction facing away from the contact surface (8), and the interacting holding elements (18) particularly preferably being formed by the protrusion of the upper part (2) in a direction facing away from the contact surface (8) and a projection of the inner upper part (12) adapted to this protrusion of the upper part (2).

13. Device (1) according to any of the preceding claims, **characterised in that** the device (1) has a holding element (9) for holding the insecticide body (7).

14. Device (1) according to any of claims 1 to 13 and claim 15, **characterised in that** the inner casing (13) forms the holding element (9) for holding the insecticide body, with preferably the inner casing (3) being divided into an upper and a lower inner casing (13", 13') which preferably each encompass the entire periphery of the inner casing (13), the upper inner casing (13") having an inclination with respect to a normal of the contact surface (8) in the direction of the casing (3) of between 30 and 60°, preferably between 40 and 50°, particularly preferably between 42 and 45°, in particular the insecticide body (7) being partly enclosed by the upper inner casing (13"), the casing (3) and the upper part (2), and/or the lower inner casing (13') being substantially normal to the contact surface (8).

15. Device (1) according to any of the preceding claims, **characterised in that** the upper part (2) is planar and preferably polygonal, particularly preferably quadrilateral, hexagonal, or octagonal, or elliptical, particularly preferably substantially circular, with preferably an upper and/or a lower side of the upper part (2) having an area of between 1 and 100 cm², particularly preferably between 5 and 25 cm², even more preferably between 10 and 20 cm², a length of the upper part (2) in an extension direction lying substantially in parallel with the contact surface (8) being between 1 and 15 cm, particularly preferably between 2 and 10 cm, even more preferably between 4 and 8 cm, with preferably a width of the upper part (2) in an extension direction lying substantially in parallel with the contact surface (8) and normal to the extension direction of the length being between 0.1 and 1 times, preferably between 0.2 and 0.8 times, particularly preferably between 0.4 and 0.6 times the length, and/or the upper part (2) being concave, the angle between each extension direction of the upper part (2) and the contact surface (8) preferably being less than 10°, particularly preferably less than 5°, even more preferably less than 3°, in the functional state.

## Revendications

1. Dispositif (1) pour la lutte contre les insectes avec une partie supérieure (2), une enveloppe (3) qui dépasse globalement d'une circonférence de la partie supérieure (2) et un corps d'insecticide (7), où la partie supérieure (2), l'enveloppe (3) et une surface de contact (8) délimitent, dans une position fonctionnelle, partiellement une cavité (5), où le dispositif (1) comprend, dans la cavité (5), le corps d'insecticide (7), et au moins une ouverture de passage (4) vers la cavité (5) est prévue,
le dispositif (1) étant **caractérisé en ce qu'**il comprend une partie interne (10) dans la cavité (5) formée par l'enveloppe (3), la partie supérieure (2) et la surface de contact (8), qui est reliée de manière fixe ou amovible avec la partie supérieure (2) ou est formée d'une seule pièce avec celle-ci, où la partie interne (10) comprend une enveloppe interne (13), de façon à ce que l'enveloppe interne (13), la partie supérieure (2) et la surface de contact (8) forment globalement un corps creux interne, où le corps d'insecticide (7) se trouve dans un volume qui est formé grâce au fait que le volume de la cavité qui est formée par l'enveloppe interne (13), la partie supérieure (2) et la surface de contact (8), est soustrait du volume de la cavité qui est formée par l'enveloppe (3), la partie supérieure (2) et la surface de contact (8).

2. Dispositif (1) selon la revendication 1, **caractérisé en ce que** l'au moins une ouverture de passage (4) est prévue dans l'enveloppe (3), où, de préférence, l'au moins une ouverture de passage (4) est disposée de façon à ce qu'une direction normale par rapport à la surface d'ouverture de l'ouverture de passage (4) correspondante est globalement parallèle à la surface de contact (8).

3. Dispositif (1) selon l'une des revendications précédentes, **caractérisé en ce que** l'enveloppe (3) est prévue pour être posée sur la surface de contact (8) et pour maintenir, dans la position fonctionnelle, la partie supérieure (2) au moins partiellement à distance de la surface de contact (8).

4. Dispositif (1) selon l'une des revendications précédentes, **caractérisé en ce que** l'extension longitudinale de l'enveloppe (3) perpendiculairement à la surface de contact (8) est supérieure à l'extension longitudinale du corps d'insecticide (7) perpendiculairement à la surface de contact (8).

5. Dispositif (1) selon l'une des revendications précédentes, **caractérisé en ce que**
une surface de l'enveloppe (3) s'étend globalement perpendiculairement à la surface de contact (8),
l'enveloppe (3) présente une inclinaison par rapport à une normale de la surface de contact (8) en direction du corps creux (5) comprise entre 30 et 60°, de préférence entre 40 et 50°, plus particulièrement de préférence entre 42 et 45° et/ou
l'enveloppe (3) présente une hauteur dans une direction d'extension perpendiculaire à la surface de contact (8) comprise entre 2 et 30 mm, de préférence entre 4 et 15 mm, plus particulièrement de préférence entre 5 et 8 mm.

6. Dispositif (1) selon l'une des revendications précédentes, **caractérisé en ce que** l'enveloppe (3) comprend une pluralité d'ouvertures de passage (4), où ces ouvertures de passage (4) se trouvent globalement à la même distance, dans une direction parallèle à la surface de contact (8), par rapport à des ouvertures de passage (4) adjacentes, où la distance entre deux ouvertures de passage (4) adjacentes est de préférence inférieure à 5 mm, plus particulièrement de préférence inférieure à 3 mm, encore plus de préférence inférieure à 1 mm.

7. Dispositif (1) selon l'une des revendications précédentes, **caractérisé en ce que** les ouvertures de passage (4)
traversent l'enveloppe (3) en direction de la surface de contact (8) et/ou
présentent une largeur dans une direction d'extension globalement parallèle à la surface de contact (8) comprise entre 10 et 1 mm, de préférence entre 5 et 2 mm, plus particulièrement de préférence entre 3,5 et 2,5 mm, et de préférence une hauteur dans une direction d'extension globalement perpendiculaire à la direction d'extension de la largeur comprise entre 2 et 30 mm, de préférence entre 3 et 10 mm, plus particulièrement de préférence entre 3 et 6 mm.

8. Dispositif (1) selon l'une des revendications précédentes, **caractérisé en ce que** le corps d'insecticide (7) présente une section transversale globalement cylindrique, où le corps d'insecticide (7) présente de préférence
un diamètre entre 2 et 30 mm, plus particulièrement de préférence entre 3 et 10 mm, encore plus de préférence entre 3 et 5 mm et/ou un diamètre qui est de préférence entre 0,1 et 1 fois, plus particulièrement de préférence entre 0,3 fois et 0,8 fois, encore plus de préférence entre 0,4 fois et 0,7 fois la hauteur de l'enveloppe (3) dans une direction d'extension perpendiculaire à la surface de contact (8) et/ou
une forme qui suit globalement une arête formée par l'enveloppe (3) et la partie supérieure (2).

9. Dispositif (1) selon l'une des revendications précédentes, **caractérisé en ce que** le corps d'insecticide (7) est absorbant et/ou est imprégné d'une composition insecticide, où la composition insecticide contient de préférence
entre 3 et 15 % en poids, plus particulièrement de préférence entre 4 et 10 % en poids, encore plus de préférence globalement entre 6 et 7 % en poids de perméthrine,
entre 85 et 97 % en poids, plus particulièrement de préférence entre 90 et 96 % en poids, encore plus de préférence globalement entre 92 et 93 % en poids de polyéthylène, plus particulièrement du polyéthylène basse densité (LDPE) de préférence avec une densité entre 0,90 g/cm³ et 0,94 g/cm³, et/ou
entre 0 et 3 % en poids, plus particulièrement de préférence entre 0,5 et 2 % en poids, encore plus de préférence globalement 1 % en poids de butoxyde de pipéronyl.

10. Dispositif (1) selon l'une des revendications précédentes, **caractérisé en ce que** l'enveloppe interne (13) comprend une ou plusieurs ouvertures de passage (14), qui sont plus particulièrement de préférence congruentes, à certains endroits, dans des directions parallèles à la surface de contact (8), avec une ou plusieurs ouvertures de passage (4) de l'enveloppe (3).

11. Dispositif (1) selon l'une des revendications précédentes, **caractérisé en ce que** la partie interne (10) est reliée de manière amovible avec le dispositif (1) et comprend une partie supérieure interne (12), où
l'enveloppe interne (13) dépasse globalement d'une circonférence de la partie supérieure interne (12) et
de préférence la partie supérieure interne (12) est conçu sous la forme d'une plaque et/ou d'un polygone, présente globalement la même forme que la partie supérieure (2) et/ou présente, dans toute direction globalement parallèle à la surface de contact (8), une extension plus faible que la partie supérieure (2).

12. Dispositif (1) selon la revendication 11, **caractérisé en ce que** la partie supérieure (2) et la partie supérieure interne (12) comprennent des éléments de maintien (18) en interaction, où, de préférence, la partie supérieure (2) comprend, sur un côté supérieur opposé à la surface de contact (8), un élément de préhension (6), où l'élément de préhension (6) est constitué de préférence d'une protubérance de la partie supérieure (2) dans une direction plus particulièrement opposée à la surface de contact (8), et où, plus particulièrement, les éléments de maintien en interaction (18) sont constitués de la protubérance de la partie supérieure (2) dans une direction opposée à la surface de contact (8) et d'une saillie, adaptée à cette protubérance de la partie supérieure (2), de la partie supérieure interne (12).

13. Dispositif (1) selon l'une des revendications précédentes, le dispositif (1) étant **caractérisé en ce qu'**il comprend un élément de maintien (9) pour le maintien du corps d'insecticide (7).

14. Dispositif (1) selon l'une des revendications 1 à 13 et la revendication 15, **caractérisé en ce que** l'enveloppe interne (13) constitue l'élément de maintien (9) pour le maintien du corps d'insecticide, où de préférence
l'enveloppe interne (3) est divisée en des enveloppes supérieure et inférieure (13", 13'), qui englobent chacune toute la circonférence de l'enveloppe interne (13),
l'enveloppe interne supérieure (13") présente une inclinaison par rapport à une normale de la surface de contact (8) en direction de l'enveloppe (3) comprise entre 30 et 60°, de préférence entre 40 et 50°, plus particulièrement de préférence entre 42 et 45°, où plus particulièrement le corps d'insecticide (7) est englobé partiellement par l'enveloppe interne supérieure (13"), l'enveloppe (3) et la partie supérieure (2) et/ou
l'enveloppe interne inférieure (13') est globalement perpendiculaire à la surface de contact (8).

15. Dispositif (1) selon l'une des revendications précédentes, **caractérisé en ce que** la partie supérieure (2) présente une forme de plaque et est de préférence polygonale, plus particulièrement de préférence présente 4, 6 ou 8 côtés, ou est de forme elliptique, plus particulièrement de préférence globalement circulaire, où de préférence
un côté supérieur et/ou inférieur de la partie supérieure (2) présente une superficie comprise entre 1 et 100 cm², plus particulièrement de préférence entre 5 et 25 cm², encore plus de préférence entre 10 et 20 cm²,
une longueur de la partie supérieure (2) est, dans une direction d'extension globalement parallèle à la surface de contact (8), comprise entre 1 et 15 cm, plus particulièrement de préférence entre 2 et 10 cm, encore plus de préférence entre 4 et 8 cm, où, de préférence une largeur de la partie supérieure (2) dans une direction d'extension globalement parallèle à la surface de contact (8) et perpendiculaire à la direction d'extension de la longueur, est entre 0,1 et 1 fois, de préférence entre 0,2 et 0,8 fois, plus particulièrement de préférence entre 0,4 et 0,6 fois la longueur et/ou
la partie supérieure (2) est de forme concave, où de préférence l'angle entre chaque direction d'extension de la partie supérieure (2) et la surface de contact (8) est, dans l'état fonctionnel, inférieur à 10°, plus particulièrement de préférence inférieur à 5°, encore plus de préférence inférieur à 3°.
